(19) Europäisches Patentamt / European Patent Office / Office européen des brevets

(11) **EP 2 743 810 B1**

(12) **EUROPEAN PATENT SPECIFICATION**

(45) Date of publication and mention
of the grant of the patent:
**19.06.2019  Bulletin 2019/25**

(21) Application number: **13761760.1**

(22) Date of filing: **14.01.2013**

(51) Int Cl.:
*G06F 3/048* (2013.01)          *G06F 3/041* (2006.01)
*G06F 3/0488* (2013.01)        *G06F 3/0485* (2013.01)
*G06F 3/0482* (2013.01)

(86) International application number:
**PCT/CN2013/070402**

(87) International publication number:
**WO 2013/135106 (19.09.2013 Gazette 2013/38)**

(54) **TOUCH SCREEN SLIDING SEARCH METHOD AND TOUCH SCREEN DEVICE**

BERÜHRUNGSBILDSCHIRM MIT FINGERGLEIT-SUCHVERFAHREN UND
BERÜHRUNGSBILDSCHIRM

PROCÉDÉ DE RECHERCHE DE GLISSEMENT D'ÉCRAN TACTILE ET DISPOSITIF D'ÉCRAN
TACTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2012  CN 201210068778**

(43) Date of publication of application:
**18.06.2014  Bulletin 2014/25**

(73) Proprietor: **Huawei Device Co., Ltd.
Dongguan, Guangdong 523808 (CN)**

(72) Inventors:
• **LI, Hang
Shenzhen
Guangdong 518129 (CN)**

• **CHEN, Dong
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**CN-A- 101 442 584          CN-A- 101 599 001
CN-A- 102 375 588          CN-A- 102 375 588
US-A1- 2009 307 631       US-A1- 2010 138 776**

EP 2 743 810 B1

## Description

### TECHNICAL FIELD

The present invention relates to the field of electronics, and in particular, to a method for looking up by flicking on a touchscreen and a touchscreen device.

### BACKGROUND

With rapid development of electronic devices, touchscreen products attract much attention with easy operations, convenient usage, and superior appearance. Their applicable fields are gradually diversified, for example, touchscreen mobile phones, touchscreen palm computers, and touchscreen displays for trade fair activities.

As touchscreen products gradually become mature, there are more available functional entries. For example, a contact list or a song list of a mobile phone can be looked up by flicking touchscreen entries, and a game list or a video list of a touchscreen palm computer can also be looked up by flicking touchscreen entries.

However, as list entries gradually increase, a target entry cannot be found quickly by flicking to look it up. For example, a mobile phone of a user may often store up to hundreds of contacts, but only dozens of them are common contacts. In this case, if the user looks up a contact by flicking on the touchscreen, when the user flicks on the touchscreen with a finger, contact entries scroll on the screen till stop. Because a distance of each flick is determined by a velocity when the finger of the user leaves the touchscreen after flicking on the touchscreen, in most cases, a contact where the contact entries finally stop scrolling is not a contact that the user really needs to look up. In this case, the user still needs to further flick at a low velocity to make a precise lookup. It is evident that the existing method for looking up by flicking on a touchscreen is troublesome, inconvenient, and inefficient.

US20100138776 A1 discloses an apparatus that includes a display configured to show one or more displayed items of a plurality of items, wherein a number of the plurality of items extend off at least one end of the display, a scrolling circuitry configured for sensing a touching down on the display on one or more of the displayed items and a dragging motion of the one or more displayed items in a direction, and a processor configured for automatically setting an initial speed for scrolling the plurality of items and configured for continuously reducing the scrolling speed proportionate to the plurality of items, so that scrolling slows and then stops upon reaching the last item.

CN102375588 A discloses a method and a device for controlling equipment operation through a gesture on a screen of electronic equipment, so that an operator interface of the screen is simple and clear to improve user experience. The method comprises the following steps: detecting an initial point of a drag gesture of a finger for one of a plurality of operation objects on the screen of the electronic equipment; moving the plurality of operation objects on a preset track along the drag gesture; detecting an end point of the drag gesture to make the plurality of operation objects stay at the current pre-staying position along the ending of the drag gesture; and detecting that whether there is an operation object at a preset selected position, and if there is not an operation object at the preset selected position, correcting the pre-staying position, and moving an operation object adjacent to the preset selected position to the preset selected position.

### SUMMARY

Embodiments of the present invention provide a method for looking up by flicking on a touchscreen and a touchscreen device, which can improve efficiency of a user in looking up an entry by flicking on a touchscreen.

In order to achieve the foregoing objective, the following technical solutions are adopted in the embodiments of the present invention.

According to one aspect, a touchscreen flicking lookup method is provided, to look up a target entry in an entry list, where the method includes:

> obtaining an initial entry corresponding to a leaving position where a touch body leaves a touchscreen after flicking on the touchscreen, and an initial flicking velocity of the initial entry;
> determining a predicted flicking distance of the initial entry according to the initial flicking velocity and a preset acceleration;
> obtaining widths of entries opposite to a flicking direction from the initial entry in the entry list;
> determining a predicted target entry starting from the initial entry according to the predicted flicking distance and the widths of the entries;
> if the predicted target entry is not a preset common entry, determining that a common entry in a position nearest to the predicted target entry in a preset range is an actual target entry; and
> displaying the actual target entry in a display area of the touchscreen.

According to another aspect, a touchscreen device is provided, including:

> a first obtaining unit, configured to obtain an initial entry corresponding to a leaving position where a touch body leaves the touchscreen after flicking on the touchscreen, and an initial flicking velocity of the initial entry;
> a first calculating unit, configured to determine a predicted flicking distance of the initial entry according to the initial flicking velocity obtained by the obtaining unit and a preset acceleration;

a second obtaining unit, configured to obtain widths of entries opposite to a flicking direction from the initial entry in an entry list;

a second calculating unit, configured to determine a predicted target entry starting from the initial entry according to the predicted flicking distance determined by the first calculating unit and the widths of the entries obtained by the second obtaining unit;

a processing unit, configured to, if it is determined that the predicted target entry determined by the second calculating unit is not a preset common entry, determine that a common entry in a position nearest to the predicted target entry in a preset range is an actual target entry; and

a display unit, configured to display the actual target entry determined by the processing unit in a display area of the touchscreen.

According to a method for looking up by flicking on a touchscreen and a touchscreen device provided by the embodiments of the present invention, the touchscreen device obtains an initial entry corresponding to a leaving position where a touch body leaves a touchscreen after flicking on the touchscreen, and obtains a initial flicking velocity of the initial entry and a preset acceleration, so as to determine a predicted flicking distance of the initial entry; then obtains a predicted target entry according to widths of entries; and when the predicted target entry is not a common entry, obtains an actual target entry according to whether a common entry exists in a preset range, and displays the actual target entry in a display area of the touchscreen. In this way, a probability that a user finds the common entry after flicking on the touchscreen device is increased. Since the user usually wants to find a commonly used entry during lookup, compared with the prior art where a flicking stop position is determined according only to flicking strength, determining an entry where flicking finally stops by using a common entry can help the user quickly find a desired entry in a better way and enables touchscreen flicking to help the user look up the desired entry conveniently and quickly, thereby improving efficiency of the user in looking up a target entry by flicking on the touchscreen. The present invention will be carried out according to the attached independent claims.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for looking up by flicking on a touchscreen according to an embodiment of the present invention;

FIG. 2 is a schematic flowchart of a method for looking up by flicking on a touchscreen according to another embodiment of the present invention;

FIG. 3 is a schematic structural diagram of a touchscreen device according to an embodiment of the present invention; and

FIG. 4 is a schematic structural diagram of another touchscreen device according to an embodiment of the present invention.

**DESCRIPTION OF EMBODIMENTS**

The following clearly and completely describes the technical solutions in the embodiments of the present invention with reference to the accompanying drawings in the embodiments of the present invention.

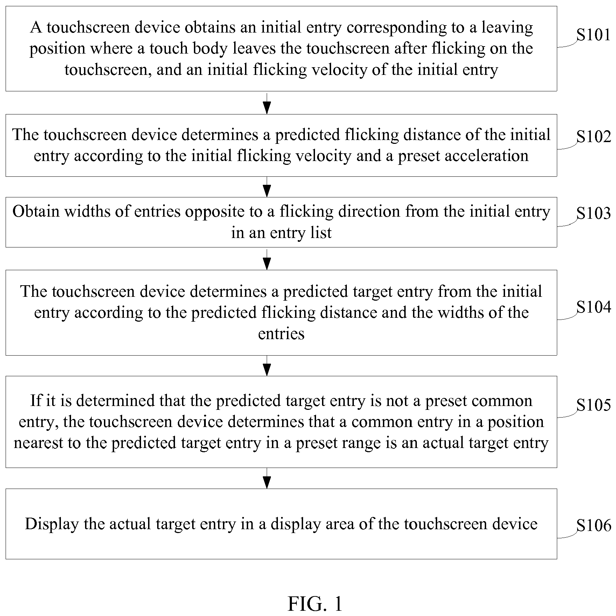

An embodiment of the present invention provides a method for looking up by flicking on a touchscreen. As shown in FIG. 1, the method includes the following steps.

S101: Obtain an initial entry corresponding to a leaving position where a touch body leaves a touchscreen after flicking on the touchscreen, and an initial flicking velocity of the initial entry.

It is worth pointing out that a finger or a touch pen may be used as the touch body on a touchscreen device, and the touchscreen device obtains the initial entry, such as a song track or a contact, corresponding to the leaving position where the finger or the touch pen leaves the touchscreen.

The touchscreen device further obtains the initial flicking velocity of the initial entry when the finger or the touch pen leaves the touchscreen. For example, a velocity at which an entry is flicked, which is driven when the touch body leaves the touchscreen, may be used as the initial flicking velocity of the initial entry. Alternatively, a flicking velocity at which an entry is flicked in a current list of the touchscreen device is calculated, according to a velocity of the finger leaving the touchscreen or a velocity of the touch pen leaving the touchscreen obtained by the touchscreen device, by using a property of the touchscreen, such as a friction coefficient, and the calculated flicking velocity is used as the initial flicking velocity of the initial entry.

It should be noted that obtaining the initial entry and obtaining the initial flicking velocity by the touchscreen device are not subject to an order. They may be obtained in any order or obtained simultaneously.

S102: Determine a predicted flicking distance of the initial entry according to the initial flicking velocity and a preset acceleration.

Exemplarily, after the touch body leaves the screen, the initial entry may move at a decelerated velocity according to the preset acceleration. Different touchscreen devices may preset different accelerations for the decelerated motion because of their different internal configurations and settings. The preset accelerations may be set in advance according to different configurations and settings of different touchscreen devices.

The touchscreen device obtains a flicking time t according to a preset acceleration a and an initial flicking velocity $v_0$, as shown in formula (1), and calculates a predicted flicking distance s according to the flicking time t, the preset acceleration a, and the initial flicking velocity $v_0$, as shown in formula (2).

$$t = -\frac{v_0}{a} \qquad (1)$$

$$s = v_0 t + \frac{1}{2} a t^2 \qquad (2)$$

It should be noted that the predicted flicking distance s calculated here is determined according only to the preset acceleration a and the initial flicking velocity $v_0$ currently obtained by the touchscreen device. A distance between a target entry displayed when an entry list on the touchscreen device stops flicking and the initial entry may be equal to the predicted flicking distance s, or, depending on an actual situation, may also be unequal to the predicted flicking distance s.

S103: Obtain widths of entries opposite to a flicking direction from the initial entry in an entry list.

It should be noted that, the widths of the entries in different lists of different devices or of a same device may be different. Therefore, the touchscreen device obtains the widths of the entries in the list according to the list currently being used, such as a width of each track in a music list or a width of each contact in an address book.

It is worth pointing out that the widths of the entries in a same list of a same device may be the same or different. If the widths are the same, the width of one of the entries may be obtained as the widths of the entries; and if the widths are different, the widths of the entries need to be obtained separately.

When an entry list is flicked, the entry list is flicked along a flicking direction of the touch body. That is, an entry displayed in a display area after the flicking stops is on a side in the entry list opposite to the flicking direction of the initial entry. Therefore, it is only necessary to obtain the widths of the entries opposite to the flicking direction starting from the initial entry in the entry list. Certainly, widths of other entries may also be obtained.

S104: Determine a predicted target entry starting from the initial entry according to the predicted flicking distance and the widths of the entries.

Exemplarily, if the widths of the entries in the current list of the touchscreen device are equal, the predicted flicking distance is divided by the width of an entry (if the entries have equal widths), and how many entries flick over a fixed position can be calculated. If the number 35 is obtained according to the foregoing algorithm, it can be obtained that 35 entries flick over the leaving position corresponding to the initial entry. Then, the 35th entry after the initial entry is the predicted target entry.

If the widths of the entries in the current list of the touchscreen device are unequal, the widths of the entries starting from the initial entry are added up until a sum of the widths reaches the predicted flicking distance. An entry where a final sum of the widths is equal to the predicted flicking distance is used as the predicted target entry.

S105: If it is determined that the predicted target entry is not a preset common entry, determine that a common entry in a position nearest to the predicted target entry in a preset range is an actual target entry.

Exemplarily, the obtained predicted target entry is the 35th entry after the initial entry, and the preset range is five entries before and five entries after the predicted target entry. When the 35th entry after the initial entry is not a common entry, and another entry in the five entries before and five entries after the 35th entry after the initial entry is a common entry, the common entry is found from the five entries before and five entries after the 35th entry, and is determined as the actual target entry. When the 35th entry after the initial entry is not a common entry, and multiple common entries exist among the five common entries before and five common entries after the 35th entry, for example, three common entries exist, a common entry nearest to the 35th entry is determined; for example, the three common entries are respectively the second entry and the fourth entry after the 35th entry and the fifth entry before the 35th entry, it is determined that the second entry after the 35th entry is the actual target entry.

Further, determining whether an entry is a common entry can be implemented in a manner of associating the entry with a common entry list. For example, it is determined whether the entry belongs to the common entry list, if yes, it is determined that the entry is a common entry, and if no, it is determined that the entry is not a common entry.

It should be noted that the actual target entry is determined according to whether a common entry exists in the preset range, and the actual target entry may be different from the predicted target entry corresponding to the predicted flicking distance.

The common entry list consists of common entries. Preferably, the common entries may be determined according to following principles. For example, the common entries may be determined according to frequencies of use of the entries. For example, ten entries having the highest frequencies of use are used as the common entries, and the ten entries constitute the common entry list. Alternatively, the common entries may be determined according to last used time of the entries. For example, ten entries whose last used time is closest to a current time are used as the common entries, and the ten entries constitute the common entry list. It should be noted that there may be various manners of determining the common entries, which are not specifically limited herein.

S106: Display the actual target entry in a display area of the touchscreen device.

It should be noted that, when flicking entries on the touchscreen device stops, a position of the actual target item where flicking stops may be different according to different settings of the touchscreen device. For example, the touchscreen device may set the position of the actual target entry in the first entry on the top of a display page; or the touchscreen device may set the position of the actual target entry in a central position of the page.

It should be noted that the touchscreen device may further remind the user of the position of the actual target entry in the display area by displaying the actual target entry raised or sunken.

It should be noted that, in the foregoing embodiment, after the touch body flicks the entry list, it is possible that the whole entry list flicks together, and when the flicking stops, the actual target entry is displayed in the display area; it is also possible that a part of the entry list flicks, for example, entries opposite to the flicking direction starting from the initial entry flick in the entry list; it is also possible that the whole entry list does not move, and the target entry replaces the initial entry to be displayed in the position of the initial entry after the touch body leaves the touchscreen.

In a method for looking up by flicking on a touchscreen provided by this embodiment of the present invention, a touchscreen device may obtain a predicted target entry by using obtained initial flicking velocity and initial entry, and a preset acceleration; and when the predicted target entry is not a common entry, obtain an actual target entry according to whether a common entry exists in a preset range, and display the actual target entry in a display area of the touchscreen device. In this way, a probability that a user finds a common entry after flicking on the touchscreen device is increased. Since the user usually wants to find a commonly used entry during lookup, compared with the prior art where a flicking stop position is determined according only to flicking strength, determining a position where flicking finally stops by using a common entry can help the user quickly find a desired entry in a better way, and enables touchscreen flicking to help the user look up a desired entry conveniently and quickly, thereby improving efficiency of the user in looking up an entry by flicking on the touchscreen.

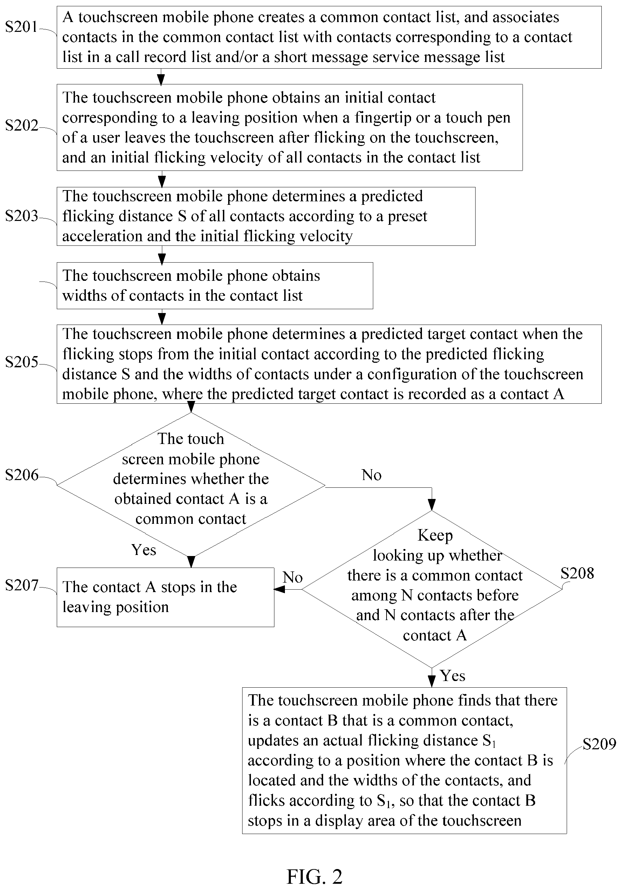

Another embodiment of the present invention provides a method for looking up by flicking on a touchscreen. This embodiment is described by using an example that a touchscreen device is a touchscreen mobile phone, an entry is a contact, and presetting common entries is creating a common contact list in advance, but is not limited thereto. As shown in FIG. 2, the method includes the following steps:

S201: Create a common contact list on the touchscreen mobile phone, and associate contacts in the common contact list with contacts corresponding to a contact list in a call record list and/or a short message service message list.

Exemplarily, a common contact list such as common contact.db is created, where each contact includes a contact ID, a contact name, and some other data fields. Contacts in the call record list and the short message service message list are associated with the common contact list by using contact IDs, because each contact has only one contact ID.

Exemplarily, contacts in the common contact list are updated according to a preset rule. For example, the contacts in the common contact list are added or deleted according to the preset rule. When contacts are added or deleted in the call record list (including dialed calls, received calls, and missing calls) and the short message service message list (including an in-box, an out-box, sent mails, and a draft box), addition or deletion is also accordingly performed on the corresponding common contact list.

Further, the preset rule may be that, when a new call record is added to the call record list or a short message service message enters the in-box, whether a call contact or a short message service message sender exists in an address book is checked first, and if exists, the contact is added to the common contact list. When a user deletes all call records and short message service messages of a certain contact, and clears this person from the address book, the contact is deleted from the common contact list accordingly.

Alternatively, the preset rule may be that a frequency threshold is set in the call record list or the short message service message list, and when incoming and outgoing calls or short message service messages of a contact with the mobile phone user exceed the frequency threshold, for example, 5 times, in a set period, for example, a week, the contact is added to the common contact list. Meanwhile, when a frequency at which a contact in the common contact list contacts the mobile phone user in the set period is lower than the frequency threshold, the contact is deleted from the common contact list.

Alternatively, the preset rule may also be determining the common contact list according to frequencies of use of entries. For example, ten entries having the highest frequencies of use are used as common entries, and the ten entries constitute the common contact list; or, the common contact list is determined according to last used time of entries, for example, ten entries whose last used time closest to a current time are used as common entries, and the ten entries constitute the common contact list. It should be noted that there may be various manners of determining the common contact list, which is not specifically limited herein.

It is worth pointing out that, when entries of the touchscreen device are a music list, the preset rule may also be that a frequency threshold is set according to a music listening frequency of the user, common tracks are added or deleted by comparing track listening frequencies with a set frequency value, and are stored in a common track list. The common track list is associated with a play list, and details are not described herein.

S202: The touchscreen mobile phone obtains an initial contact corresponding to a leaving position when a fingertip or a touch pen of the user leaves the touchscreen after flicking on the touchscreen, and an initial flicking velocity of the initial contact in the contact list.

Exemplarily, when the user needs to look up a certain contact in the address book, and when opening the address book, the user uses a fingertip to drive flicking of an entry, or uses a touch pen to flick the address book. A velocity of flicking the contact list, which is driven by the fingertip or the touch pen when leaving a mobile phone screen, is used as the initial flicking velocity of the initial contact, and is recorded as v. A contact corresponding to the last leaving position of the fingertip or the touch pen is determined as the initial contact.

S203: The touchscreen mobile phone determines a predicted flicking distance S of the initial contact according to a preset acceleration and the initial flicking velocity.

It is worth pointing out that, when the fingertip or the touch pen leaves the screen, the contact may flick at a decelerated velocity. Therefore, the predicted flicking distance S may be calculated according to the preset acceleration and the obtained initial flicking velocity, where the preset acceleration may be specifically set according to different configurations of the mobile phone.

S204: The touchscreen mobile phone obtains widths of contacts in the contact list.

It should be noted that, the mobile phone obtains the widths of the contacts according to a width occupied by each contact in the contact list under a current configuration. For example, the width of each contact in the contact list obtained by the touchscreen mobile phone is 0.5 centimeters, or the widths of contacts are values that are not all the same.

S205: The touchscreen mobile phone determines a predicted target contact when the flicking stops from the initial contact according to the predicted flicking distance S and the widths of contacts under the configuration of the touchscreen mobile phone, where the predicted target contact is recorded as a contact A.

Exemplarily, if the width of each contact in the contact list obtained by the touchscreen mobile phone is 0.5 centimeters, and the obtained predicted flicking distance S equals 17.5 centimeters, the touchscreen mobile phone divides 17.5 centimeters by 0.5 centimeters to obtain 35, and then determines that the 35th contact after the initial contact from the initial contact is the predicted target contact.

Alternatively, if the widths of the contacts in the contact list obtained by the touchscreen mobile phone are values that are not all the same, the touchscreen mobile phone may add the widths of the contacts until the predicted flicking distance is reached, to determine the predicted target contact, and details are not described herein.

Preferably, the predicted flicking distance caused by the fingertip or the touch pen of the user may be a value with multiple decimal places. The touchscreen mobile phone may preset a round-off rule, and specifies that a value of the predicted flicking distance be set to an order of magnitude of 0.1. For example, 17.4624 centimeters is rounded up to 17.5 centimeters. Only one setting rule is exemplified here, and the present invention is not limited thereto.

S206: The touchscreen mobile phone determines whether the obtained contact A is a common contact, if yes, execute step S207; and if no, execute S208.

It is worth pointing out that, in this embodiment, the contact in a position corresponding to the predicted flicking distance is used as the predicted target contact. Since the predicted target contact is not necessarily the actual contact where flicking finally stops, the touchscreen mobile phone may not perform any display setting for the predicted target contact.

S207: The touchscreen mobile phone flicks according to the predicted flicking distance S, and the contact A is displayed in a display area of the touchscreen mobile phone.

S208: The touchscreen mobile phone keeps looking up whether there is a contact belonging to the common contact list among N contacts before and N contacts after the contact A, where N is an integer greater than 1, if yes, execute S209, and if no, execute S207.

S209: The touchscreen mobile phone finds that there is a contact B that is a common contact, updates an actual flicking distance $S_1$ according to a position where the contact B is located and the widths of the contacts, and flicks according to $S_1$, so that the contact B is displayed in the display area of the touchscreen mobile phone.

Exemplarily, the contact A is in the position corresponding to the predicted flicking distance S obtained by the touchscreen mobile phone. If the contact A belongs to common contacts, the touchscreen mobile phone flicks according to the predicted flicking distance S, and finally makes the contact A to stop in the position where the touch body leaves the touchscreen.

If the contact A is not a common contact, the touchscreen mobile phone keeps looking up whether there is a common contact among five contacts before and five contacts after the contact A. If only the contact B belongs to common contacts, the touchscreen mobile phone re-calculates the actual flicking distance $S_1$ according to the position where the contact B is located and the widths of the contacts. If the contact B is in a position three contact entries away from the contact A, $S_1 = S + 3 \times$ contact entry width. The touchscreen mobile phone flicks according to $S_1$, to make the contact B to stop in the position where the touch body leaves the touchscreen. A method for implementing the flicking according to $S_1$ may be changing the preset acceleration to an appropriate value, to make the touchscreen mobile phone to exactly flick for $S_1$ when the flicking velocity falls to zero, and may also be flicking to the contact A, and then actively flicking to the contact B.

If there is no common contact in a range of five contacts before and five contacts after the contact A, the touchscreen mobile phone flicks according to the distance of S, and the contact A stops in the position where the touch body leaves the touchscreen.

Further, when the touchscreen mobile phone keeps looking up whether there is a contact belonging to common contacts among the five contacts before and five contacts after the contact A, if both the contact B and a contact C are common contacts, the touchscreen mobile phone separately calculates distance differences between positions of the contact B and the contact C to the position of the contact A, and selects the one with a distance nearest to the contact A. For example, the contact B is in a position one entry before the contact A, and the contact C is in a position three entries after the contact A, and then the touchscreen mobile phone re-calculates the actual flicking distance $S_1$ according to the position where the contact B is located, and flicks according to $S_1$, to make the contact B to stop in the position where the touch body leaves the touchscreen.

In a method for looking up by flicking on a touchscreen provided by this embodiment of the present invention, a touchscreen device may obtain a predicted target contact by using obtained initial flicking velocity and initial contact and a preset acceleration; and when the predicted target contact is not a common contact, obtain an actual target contact according to whether a common contact exists in a preset range, and display the actual target contact in a display area of the touchscreen device. In this way, a probability that a user finds a common contact after flicking on the touchscreen device is increased. Since the user usually wants to find a commonly used contact during lookup, compared with the prior art where a flicking stop position is determined according only to flicking strength, determining a position where flicking finally stops by using a common contact can help the user quickly find a desired contact in a better way, and enables touchscreen flicking to help the user look up the desired contact conveniently and quickly, thereby improving efficiency of the user in looking up a contact by flicking on the touchscreen.

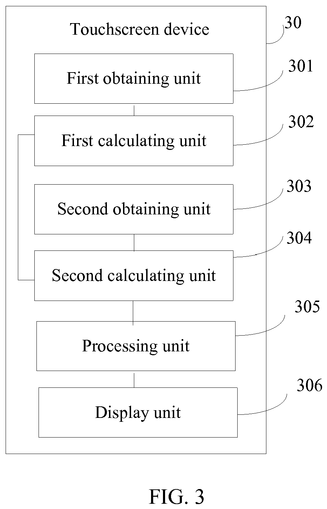

A touchscreen device 30 is provided by an embodiment of the present invention, as shown in FIG. 3, including:

A first obtaining unit 301 is configured to obtain an initial entry corresponding to a leaving position where a touch body leaves the touchscreen after flicking on the touchscreen, and an initial flicking velocity of the initial entry.

Exemplarily, the touch body may be a touch pen or a fingertip used by a user.

A first calculating unit 302 is configured to determine a predicted flicking distance of the initial entry according to the initial flicking velocity obtained by the first obtaining unit 301 and a preset acceleration.

A second obtaining unit 303 is configured to obtain widths of entries opposite to a flicking direction from the initial entry in an entry list.

It should be noted that, since the widths of the entries in different lists of the touchscreen device may be different, the second obtaining unit 303 should obtain the widths of the entries in the list currently being used. Further, the widths of the entries in the current list may be the same or different. If the widths are the same, the width of one of the entries may be obtained as the widths of the entries; and if the widths are different, the widths of the entries need to be obtained separately.

A second calculating unit 304 is configured to determine a predicted target entry starting from the initial entry according to the predicted flicking distance determined by the first calculating unit 302 and the widths of the entries obtained by the second obtaining unit 303.

Specifically, the second calculating unit 304 adds the widths of entries from the initial entry until a sum of the widths reaches the predicted flicking distance, and determines that an entry where a final sum of the widths is equal to the predicted flicking distance is the predicted target entry.

The processing unit 305 is configured to, if it is determined that the predicted target entry determined by the second calculating unit 304 is not a preset common entry, determine that a common entry in a position nearest to the predicted target entry in a preset range is an actual target entry.

Further, the processing unit 305 is further configured to, if it is determined that the predicted target entry determined by the second calculating unit 304 is the preset common entry, determine that the predicted target entry is the actual target entry.

The processing unit 305 is further configured to, if it is determined that the predicted target entry determined by the second calculating unit 304 is not the preset common entry, and that there is no preset common entry in a preset range, determine that the predicted target entry is the actual target entry.

The display unit 306 is configured to display the actual target entry determined by the processing unit 305 in a display area of the touchscreen.

It should be noted that, the touchscreen device may remind the user of the actual target entry by displaying the actual target entry raised or by using another display manner.

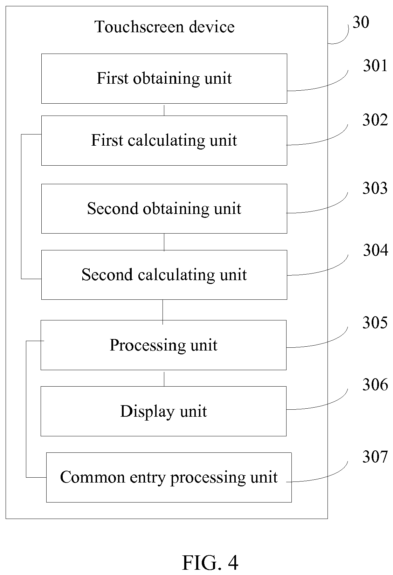

Further, as shown in FIG. 4, the touchscreen device 30 further includes a common entry processing unit 307.

The common entry processing unit 307 is configured to store a common entry that is preset, and update the common entry according to a preset rule.

Exemplarily, when an entry is a contact, and presetting the common entry is creating a common contact list in advance, the updating the common entry according to the preset rule may be associating a common contact list with a call record list and/or a short message service message list, and updating the common contact list synchronously with the call record list and/or the short message service message list.

Further, if a recent contact is added to the call record list and/or the short message service message list, according to the set rule, the common entry processing unit 307 adds the recent contact that meets the rule to the common contact list.

Preferably, if a recent contact is added to the call record list, and the recent contact is in an address book, the common entry processing unit 307 stores the recent contact into the common contact list. It is worth pointing out that the common entry processing unit 307 may update the common contact list by using the rules exemplified in the foregoing method embodiment, and details are not described herein again.

If a contact is deleted from the call record list and/or the short message service message list, the common entry processing unit 307 accordingly deletes the contact from the common contact list.

Preferably, when a common contact is deleted, the common contact may be deleted from the common contacts after the contact is deleted from both the common call record list and the short message service message list, to prevent some common contacts from being deleted when the user empties an in-box.

It is worth pointing out that, because the processing unit 305 determines the actual target entry by using a common entry set by the common entry processing unit 307, the actual target entry is always determined according to the latest common contact list updated by the common entry processing unit 307.

The touchscreen device 30 may operate by using the method provided in the foregoing embodiment, and the operating method is the same as the method provided by this embodiment, and details are not described herein again.

The touchscreen device provided by this embodiment of the present invention provide can obtain a predicted target entry by using obtained initial flicking velocity and initial entry and a preset acceleration; and when the predicted target entry is not a common entry, obtain an actual target entry according to whether a common entry exists in a preset range, and display the actual target entry in a display area of the touchscreen. In this way, a probability of stopping at a common entry after a user flicks on the touchscreen device is increased. Since the user usually wants to find a commonly used entry during lookup, compared with the prior art where a flicking stop position is determined according only to flicking strength, determining a position where flicking finally stops by using a common entry can help the user quickly find a desired entry in a better way, and enables touchscreen flicking to help the user look up the desired entry conveniently and quickly, thereby improving efficiency of the user in looking up an entry by flicking on the touchscreen.

## Claims

1. A method for looking up by flicking on a touchscreen, to look up a target entry in an entry list, wherein the method comprises:

    obtaining an initial entry corresponding to a leaving position where a touch body leaves a touchscreen after flicking on the touchscreen, and an initial flicking velocity of the initial entry; determining a predicted flicking distance of the initial entry according to the initial flicking velocity and a preset acceleration; obtaining widths of entries opposite to a flicking direction from the initial entry in the entry list; determining a predicted target entry starting from the initial entry according to the predicted flicking distance and the widths of the entries; if the predicted target entry is not a preset common entry, wherein a common entry belongs to a common entry list which is determined according to the frequency of use or the last use date of the entries, determining that a common entry in a position nearest to the predicted target entry in a preset range is an actual target entry; and displaying the actual target entry in a display area of the touchscreen.

2. The method according to claim 1, wherein the method further comprises:
   if the predicted target entry is the preset common entry, determining that the predicted target entry is the actual target entry.

3. The method according to claim 1 or 2, wherein the method further comprises:
   if the predicted target entry is not the preset common entry, and there is no preset common entry in the preset range, determining that the predicted target entry is the actual target entry.

4. The method according to any one of claims 1 to 3, wherein the determining a predicted target entry starting from the initial entry according to the predicted flicking distance and the widths of the entries specifically comprises:
   adding the widths of entries starting from the initial entry until a sum of the widths reaches the predicted flicking distance, and determining that an entry where a final sum of the widths is equal to the predicted flicking distance is the predicted target entry.

5. The method according to any one of claims 1 to 4, wherein the method further comprises:
   presetting a common entry, and updating the common entry according to a preset rule.

6. A touchscreen device (30), comprising:

a first obtaining unit (301), configured to obtain an initial entry corresponding to a leaving position where a touch body leaves the touchscreen after flicking on the touchscreen, and an initial flicking velocity of the initial entry;

a first calculating unit (302), configured to determine a predicted flicking distance of the initial entry according to the initial flicking velocity obtained by the obtaining unit and a preset acceleration;

a second obtaining unit (303), configured to obtain widths of entries opposite to a flicking direction from the initial entry in an entry list;

a second calculating unit (304), configured to determine a predicted target entry starting from the initial entry according to the predicted flicking distance determined by the first calculating unit (302) and the widths of the entries obtained by the second obtaining unit (303);

a processing unit (305), configured to, if it is determined that the predicted target entry determined by the second calculating unit (304) is not a preset common entry, wherein a common entry belongs to a common entry list which is determined according to the frequency of use or the last used date of the entries, determine that a common entry in a position nearest to the predicted target entry in a preset range is an actual target entry; and

a display unit (306), configured to display the actual target entry determined by the processing unit (305) in a display area of the touchscreen.

7. The device according to claim 6, wherein:
the processing unit (305) is further configured to, if the predicted target entry determined by the second calculating unit (304) is the preset common entry, determine that the predicted target entry is the actual target entry.

8. The device according to claim 6 or 7, wherein:
the processing unit (305) is further configured to, if the predicted target entry determined by the second calculating unit (304) is not the preset common entry, and there is no preset common entry in the preset range, determine that the predicted target entry is the actual target entry.

9. The device according to any one of claims 6 to 8, wherein:
the second calculating unit (304) is specifically configured to add the widths of entries starting from the initial entry until a sum of the widths reaches the predicted flicking distance, and determine that an entry where a final sum of the widths is equal to the predicted flicking distance is the predicted target entry.

10. The device according to any one of claims 6 to 9, further comprising:
a common entry processing unit, configured to store a common entry that is preset, and update the common entry according to a preset rule.

**Patentansprüche**

1. Verfahren zum Nachschlagen durch Streichen auf einem Berührungsbildschirm zum Nachschlagen eines Zieleintrags in einer Eintragsliste, wobei das Verfahren umfasst:

Erhalten eines ursprünglichen Eintrags, der einer Austrittsposition entspricht, wobei ein Berührungskörper nach dem Streichen auf dem Berührungsbildschirm einen Berührungsbildschirm verlässt, und einer anfänglichen Streichgeschwindigkeit des anfänglichen Eintrags;
Bestimmen einer vorhergesagten Streichstrecke des anfänglichen Eintrags entsprechend der anfänglichen Streichgeschwindigkeit und einer vorgegebenen Beschleunigung;
Erhalten von Breiten von Einträgen entgegengesetzt einer Streichrichtung vom anfänglichen Eintrag in der Eintragsliste;
Bestimmen eines vorhergesagten Zieleintrags beginnend ab dem anfänglichen Eintrag entsprechend der vorhergesagten Streichstrecke und den Breiten der Einträge;
falls der vorhergesagte Zieleintrag nicht ein vorgegebener gemeinsamer Eintrag ist, wobei ein gemeinsamer Eintrag zu einer Liste gemeinsamer Einträge gehört, die festgelegt wird entsprechend der Verwendungshäufigkeit oder dem Datum der letzten Verwendung der Einträge, Festlegen, dass ein gemeinsamer Eintrag in einer zum vorhergesagten Zieleintrag in einem vorgegebenen Bereich nächstgelegenen Position ein effektiver Zieleintrag ist; und
Anzeigen des effektiven Zieleintrags in einem Anzeigebereich des Berührungsbildschirms.

2. Verfahren nach Anspruch 1, wobei das Verfahren ferner umfasst:
Falls der vorhergesagte Zieleintrag der vorgegebene gemeinsame Eintrag ist, Festlegen, dass der vorhergesagte Zieleintrag der effektive Zieleintrag ist.

3. Verfahren nach Anspruch 1 oder 2, wobei das Verfahren ferner umfasst:
Falls der vorhergesagte Zieleintrag nicht der vorgegebene gemeinsame Eintrag ist und im vorgegebenen Bereich kein vorgegebener gemeinsamer Eintrag vorliegt, Festlegen, dass der vorhergesagte Zieleintrag der effektive Zieleintrag ist.

4. Verfahren nach einem der Ansprüche 1 bis 3, wobei das Bestimmen eines vorhergesagten Zieleintrags beginnend ab dem anfänglichen Eintrag entsprechend der vorhergesagten Streichstrecke und den Breiten der Einträge im Einzelnen umfasst:
Addieren der Breiten von Einträgen beginnend mit dem anfänglichen Eintrag, bis eine Summe der Breiten die vorhergesagte Streichstrecke erreicht, und Festlegen, dass ein Eintrag, bei dem eine abschließende Summe der Breiten gleich der vorhergesagten Streichstrecke ist, der vorhergesagte Zieleintrag ist.

5. Verfahren nach einem der Ansprüche 1 bis 4, wobei das Verfahren ferner umfasst:
Vorgeben eines gemeinsamen Eintrags und Aktualisieren des gemeinsamen Eintrags gemäß einer vorgegebenen Regel.

6. Berührungsbildschirmeinrichtung (30), umfassend:

eine erste Erhalteinheit (301), ausgelegt zum Erhalten eines anfänglichen Eintrags entsprechend einer Austrittsposition, wobei ein Berührungskörper nach dem Streichen auf dem Berührungsbildschirm einen Berührungsbildschirm verlässt, und einer anfänglichen Streichgeschwindigkeit des anfänglichen Eintrags;
eine erste Berechnungseinheit (302), ausgelegt zum Bestimmen einer vorhergesagten Streichstrecke des anfänglichen Eintrags entsprechend der von der Erhalteinheit erhaltenen anfänglichen Streichgeschwindigkeit und einer vorgegebenen Beschleunigung;
eine zweite Erhalteinheit (303), ausgelegt zum Erhalten von Breiten von Einträgen entgegengesetzt zu einer Streichrichtung vom anfänglichen Eintrag in einer Eintragsliste;
eine zweite Berechnungseinheit (304), ausgelegt zum Bestimmen eines vorhergesagten Zieleintrags beginnend ab dem anfänglichen Eintrag entsprechend der durch die erste Berechnungseinheit (302) bestimmten vorhergesagten Streichstrecke und der durch die zweite Erhalteinheit (303) erhaltenen Breiten der Einträge;
eine Verarbeitungseinheit (305), dafür ausgelegt, falls festgelegt wird, dass der von der zweiten Berechnungseinheit (304) bestimmte vorhergesagte Zieleintrag nicht ein vorgegebener gemeinsamer Eintrag ist, wobei ein gemeinsamer Eintrag zu einer Liste gemeinsamer Einträge gehört, die festgelegt wird entsprechend der Verwendungshäufigkeit oder dem Datum der letzten Verwendung der Einträge, festzulegen, dass ein gemeinsamer Eintrag in einer zum vorhergesagten Zieleintrag in einem vorgegebenen Bereich nächstgelegenen Position ein effektiver Zieleintrag ist; und
eine Anzeigeeinheit (306), ausgelegt zur Anzeige des durch die Verarbeitungseinheit (305) bestimmten effektiven Zieleintrags in einem Anzeigebereich des Berührungsbildschirms.

7. Einrichtung nach Anspruch 6, wobei
die Verarbeitungseinheit (305) ferner dafür ausgelegt ist, falls der durch die zweite Berechnungseinheit (304) festgelegte vorhergesagte Zieleintrag der vorgegebene gemeinsame Eintrag ist, festzulegen, dass der vorhergesagte Zieleintrag der effektive Zieleintrag ist.

8. Einrichtung nach Anspruch 6 oder 7, wobei
die Verarbeitungseinheit (305) ferner dafür ausgelegt ist, falls der durch die zweite Berechnungseinheit (304) festgelegte vorhergesagte Zieleintrag nicht der vorgegebene gemeinsame Eintrag ist und im vorgegebenen Bereich kein vorgegebener gemeinsamer Eintrag vorliegt, festzulegen, dass der vorhergesagte Zieleintrag der effektive Zieleintrag ist.

9. Einrichtung nach einem der Ansprüche 6 bis 8, wobei
die zweite Berechnungseinheit (304) im Einzelnen dafür ausgelegt ist, die Breiten von Einträgen beginnend mit dem anfänglichen Eintrag zu addieren, bis eine Summe der Breiten die vorhergesagte Streichstrecke erreicht, und festzulegen, dass ein Eintrag, bei dem eine abschließende Summe der Breiten gleich der vorhergesagten Streichstrecke ist, der vorhergesagte Zieleintrag ist.

10. Einrichtung nach einem der Ansprüche 6 bis 9, ferner umfassend
eine Verarbeitungseinheit gemeinsamer Einträge, dafür ausgelegt, einen gemeinsamen Eintrag, der vorgegeben ist, zu speichern und den gemeinsamen Eintrag gemäß einer vorgegebenen Regel zu aktualisieren.

**Revendications**

1. Procédé pour effectuer une recherche en réalisant des contacts rapides sur un écran tactile, pour rechercher une entrée cible dans une liste d'entrées, dans lequel le procédé comprend :

l'obtention d'une entrée initiale correspondant à une position de retrait où un corps tactile se retire d'un écran tactile après avoir réalisé des contacts rapides sur l'écran tactile, et d'une vitesse de contact rapide initiale de l'entrée initiale ;
la détermination d'une distance de contact rapide prévue de l'entrée initiale selon la vitesse de contact rapide initiale et une accélération prédéfinie ;
l'obtention de largeurs d'entrées opposées à une direction de contact rapide à partir de l'entrée initiale dans la liste d'entrées ;
la détermination d'une entrée cible prévue en commençant à partir de l'entrée initiale selon la distance de contact rapide prévue et les largeurs des entrées ;
si l'entrée cible prévue n'est pas une entrée commune prédéfinie, dans lequel une entrée commune appartient à une liste d'entrées communes qui est déterminée selon la fréquence d'utilisation ou la dernière date d'utilisation des entrées, la détermination qu'une entrée commune dans une position la plus près de l'entrée cible prévue dans une étendue prédéfinie est une entrée cible à proprement parler ; et
l'affichage de l'entrée cible à proprement parler dans une zone d'affichage de l'écran tactile.

2. Procédé selon la revendication 1, dans lequel le procédé comprend en outre :
si l'entrée cible prévue est l'entrée commune prédéfinie, la détermination que l'entrée cible prévue est l'entrée cible à proprement parler.

3. Procédé selon la revendication 1 ou 2, dans lequel le procédé comprend en outre :
si l'entrée cible prévue n'est pas l'entrée commune prédéfinie, et il n'y a aucune entrée commune prédéfinie dans l'étendue prédéfinie, la détermination que l'entrée cible prévue est l'entrée cible à proprement parler.

4. Procédé selon l'une quelconque des revendications 1 à 3, dans lequel la détermination d'une entrée cible prévue en commençant à partir de l'entrée initiale selon la distance de contact rapide prévue et les largeurs des entrées spécifiquement comprend :
l'addition des largeurs d'entrées en commençant à partir de l'entrée initiale jusqu'à ce qu'une somme des largeurs atteigne la distance de contact rapide prévue, et la détermination qu'une entrée où une somme finale des largeurs est égale à la distance de contact rapide prévue est l'entrée cible prévue.

5. Procédé selon l'une quelconque des revendications 1 à 4, dans lequel le procédé comprend en outre :
la prédéfinition d'une entrée commune, et la mise à jour de l'entrée commune selon une règle prédéfinie.

6. Dispositif à écran tactile (30), comprenant :

une première unité d'obtention (301), configurée pour obtenir une entrée initiale correspondant à une position de retrait où un corps tactile se retire de l'écran tactile après avoir réalisé des contacts rapides l'écran tactile, et une vitesse de contact rapide initiale de l'entrée initiale ;
une première unité de calcul (302), configurée pour déterminer une distance de contact rapide prévue de l'entrée initiale selon la vitesse de contact rapide initiale obtenue par l'unité d'obtention et une accélération prédéfinie ;
une seconde unité d'obtention (303), configurée pour obtenir des largeurs d'entrées opposées à une direction de contact rapide à partir de l'entrée initiale dans une liste d'entrées ;
une seconde unité de calcul (304), configurée pour déterminer une entrée cible prévue en commençant à partir de l'entrée initiale selon la distance de contact rapide prévue déterminée par la première unité de calcul (302) et les largeurs des entrées obtenues par la seconde unité d'obtention (303) ;
une unité de traitement (305), configurée pour, s'il est déterminé que l'entrée cible prévue déterminée par la seconde unité de calcul (304) n'est pas une entrée commune prédéfinie, dans lequel une entrée commune appartient à une liste d'entrées communes qui est déterminée selon la fréquence d'utilisation ou la dernière date utilisée des entrées, déterminer qu'une entrée commune dans une position la plus près de l'entrée cible prévue dans une étendue prédéfinie est une entrée cible à proprement parler ; et
une unité d'affichage (306), configurée pour afficher l'entrée cible à proprement parler déterminée par l'unité de traitement (305) dans une zone d'affichage de l'écran tactile.

7. Dispositif selon la revendication 6, dans lequel :
l'unité de traitement (305) est en outre configurée pour, si l'entrée cible prévue déterminée par la seconde unité de calcul (304) est l'entrée commune prédéfinie, déterminer que l'entrée cible prévue est l'entrée cible à proprement parler.

8. Dispositif selon la revendication 6 ou 7, dans lequel :
l'unité de traitement (305) est en outre configurée pour, si l'entrée cible prévue déterminée par la seconde unité de calcul (304) n'est pas l'entrée commune prédéfinie, et il n'y a aucune entrée commune prédéfinie dans l'étendue prédéfinie, déterminer que l'entrée cible prévue est l'entrée cible à proprement parler.

9. Dispositif selon l'une quelconque des revendications 6 à 8, dans lequel :
la seconde unité de calcul (304) est spécifiquement configurée pour additionner les largeurs d'entrées en commençant à partir de l'entrée initiale jusqu'à ce qu'une somme des largeurs atteigne la distance de contact rapide prévue, et déterminer qu'une entrée où une somme finale des largeurs est égale à la distance de contact rapide prévue est l'entrée cible prévue.

**10.** Dispositif selon l'une quelconque des revendications 6 à 9, comprenant en outre :
une unité de traitement d'entrée commune, configurée pour stocker une entrée commune qui est prédéfinie, et mettre à jour l'entrée commune selon une règle prédéfinie.

A touchscreen device obtains an initial entry corresponding to a leaving position where a touch body leaves the touchscreen after flicking on the touchscreen, and an initial flicking velocity of the initial entry — S101

The touchscreen device determines a predicted flicking distance of the initial entry according to the initial flicking velocity and a preset acceleration — S102

Obtain widths of entries opposite to a flicking direction from the initial entry in an entry list — S103

The touchscreen device determines a predicted target entry from the initial entry according to the predicted flicking distance and the widths of the entries — S104

If it is determined that the predicted target entry is not a preset common entry, the touchscreen device determines that a common entry in a position nearest to the predicted target entry in a preset range is an actual target entry — S105

Display the actual target entry in a display area of the touchscreen device — S106

FIG. 1

S201 — A touchscreen mobile phone creates a common contact list, and associates contacts in the common contact list with contacts corresponding to a contact list in a call record list and/or a short message service message list

S202 — The touchscreen mobile phone obtains an initial contact corresponding to a leaving position when a fingertip or a touch pen of a user leaves the touchscreen after flicking on the touchscreen, and an initial flicking velocity of all contacts in the contact list

S203 — The touchscreen mobile phone determines a predicted flicking distance S of all contacts according to a preset acceleration and the initial flicking velocity

The touchscreen mobile phone obtains widths of contacts in the contact list

S205 — The touchscreen mobile phone determines a predicted target contact when the flicking stops from the initial contact according to the predicted flicking distance S and the widths of contacts under a configuration of the touchscreen mobile phone, where the predicted target contact is recorded as a contact A

S206 — The touch screen mobile phone determines whether the obtained contact A is a common contact

No

Yes

S207 — The contact A stops in the leaving position

No

Keep looking up whether there is a common contact among N contacts before and N contacts after the contact A          S208

Yes

The touchscreen mobile phone finds that there is a contact B that is a common contact, updates an actual flicking distance $S_1$ according to a position where the contact B is located and the widths of the contacts, and flicks according to $S_1$, so that the contact B stops in a display area of the touchscreen          S209

FIG. 2

```
┌──────────────────────────────────────────┐
│            Touchscreen device              │      ╭30
│  ┌────────────────────────────────────┐   │      ╭301
│  │        First obtaining unit         │   │
│  └────────────────────────────────────┘   │
│  ┌────────────────────────────────────┐   │      ╭302
│  │        First calculating unit       │   │
│  └────────────────────────────────────┘   │
│  ┌────────────────────────────────────┐   │      ╭303
│  │       Second obtaining unit         │   │
│  └────────────────────────────────────┘   │
│  ┌────────────────────────────────────┐   │      ╭304
│  │      Second calculating unit        │   │
│  └────────────────────────────────────┘   │
│  ┌────────────────────────────────────┐   │      305
│  │          Processing unit            │   │
│  └────────────────────────────────────┘   │
│  ┌────────────────────────────────────┐   │      306
│  │            Display unit             │   │
│  └────────────────────────────────────┘   │
└──────────────────────────────────────────┘
```

FIG. 3

Touchscreen device — 30

First obtaining unit — 301

First calculating unit — 302

Second obtaining unit — 303

Second calculating unit — 304

Processing unit — 305

Display unit — 306

Common entry processing unit — 307

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100138776 A1
- CN 102375588 A